# EUROPEAN PATENT SPECIFICATION

(11) **EP 1 775 011 B1**
(45) Date of publication and mention of the grant of the patent: **22.12.2010**
(21) Application number: 06019581.5
(22) Date of filing: 19.09.2006
(51) Int. Cl.: B01D 53/047, B01D 53/04

(54) **Pressure swing adsorption device**
Druckwechseladsorptionsanlage
Dispositif d'adsorption à pression alternée

(30) Priority: 14.10.2005 IT MI20051941
(43) Date of publication of application: 18.04.2007
(73) Proprietor: Finanziaria Unterland S.p.A., 39100 Bolzano (BZ) (IT)
(72) Inventor: Pruneri, Marco, 39040 Ora (Bolzano) (IT)
(74) Representative: Forattini, Amelia

(56) References cited:
- DE-A1- 4 320 942
- GB-A- 1 380 376
- US-A- 4 511 377
- US-A1- 2005 005 771
- "USING FLOWLAB, A COMPUTATIONAL FLUID DYNAMICS TOOL, TO FACILITATE THE TEACHING OF FLUID MECHANICS"[Online] 14 July 2005 (2005-07-14), XP002416694 Retrieved from the Internet: URL:www.iihr.uiowa.edu/~istue/Workshop_pen n%20state.ppt> [retrieved on 2007-01-25]

## Description

The present invention relates to a PSA (pressure swing adsorber) machine.

PSAs are machines that work on a mixture of gas in input, purifying it of certain components, in order to produce in output a mixture which is depleted of the unwanted gaseous components.

Constructively, the PSA is composed of two or more tanks, that contain the active ingredient that adsorbs the gaseous component to be eliminated from the mixture in output, and a series of valves and pipes, which allow to connect the tank to the source in input, to the user device and to the outside.

The cycle of the PSA machine is based on two clearly distinct operating steps.

During the first step, the container of the active ingredient filters the input mixture, removing the component to be eliminated, in the output mixture.

During the second step, the same container, in which the active ingredient is by then saturated and unable to further retain the component to be eliminated, is crossed by a mixture which is depleted of the component to be eliminated at a pressure which is considerably lower than the pressure to which it was subjected during the first step.

In this way, the filtration capacity of the active ingredient is regenerated, and at the end of the step the ingredient is again ready to perform its filtering function.

Typical examples of machines using PSA technology are nitrogen generators, oxygen generators and hydrogen purifiers.

These machines work with a mixture of compressed gas in input, by means of an adsorbent active ingredient, which is selective on specific components of the gaseous mixture, and by utilizing a pressure variation cycle, hence the name PSA, they produce an output mixture which is purified of the components that one wishes to extract.

By way of example, the nitrogen generator uses an active ingredient in which an adsorbent active ingredient, such as a CMS or a zeolite, extracts the unwanted oxygen from the compressed air in input to the machine and thus produces an output mixture which is depleted of oxygen and rich in nitrogen. That mixture can then be used in various fields of industry.

Other examples of PSA machines are oxygen generators or the more modern hydrogen purifiers.

Because such machine has an operating cycle based on two clearly distinct time steps, PSAs are generally built by using a certain number of containers organized in batteries.

By alternating one battery with the other, during the two filtration and regeneration steps, such machines produce in a continuous cycle, obviating the interruption of production introduced by the regeneration step, which instead would affect a machine with a single container or battery.

DE-4320942 and US2005/005771 disclose modular structures, for use in pressure swing adsorption systems, aimed at simplifying the construction thereof.

The aim of the present invention is to provide a machine of the PSA (pressure swing adsorber) type which is improved with respect to current methods of assembling the individual containers that constitute the batteries of PSAs.

A particular object of the invention is to provide a machine that offers tangible advantages in terms of time-saving, ease of assembly, ease of automatic assembly of the containers, and provision of PSAs characterized by reduced space occupation and structural cost.

A further object of the invention is to provide a machine which can be provided by means of commonly commercially available equipment and materials which are economic and have technical characteristics that are suitable to withstand the mechanical stresses due to the sudden changes of internal pressure that are typical of the operating cycle of the PSA.

This aim and these and other objects, which will become better apparent hereinafter, are achieved by a PSA (pressure swing adsorber) machine, comprising one or more cylindrical members, each constituting a tank of the machine and associated with a manifold by means of a respective connecting member; said cylindrical members being constituted by an extruded aluminum profile; said connecting member being constituted by a closure plug having an external thread which engages an Internal thread provided at an end of said cylindrical member; said machine being **characterized in that** said cylindrical members are fixed to one support member by means of screws; said manifold being constituted by one extruded aluminum pipe suitable to provide the pneumatic connections among said cylindrical members; said connecting member having a calibrated hole and a connecting portion with an external thread on the other end of said calibrated hole for connection to said manifold; the threads for mutually coupling said connecting member and said cylindrical member being provided in such a manner that said connecting member once screwed on, is flush with said cylindrical member, without protruding and without being recessed within.

Further characteristics and advantages will become better apparent from the description of preferred but not exclusive embodiments of the invention, illustrated by way of non-limiting example in the accompanying drawings, wherein:

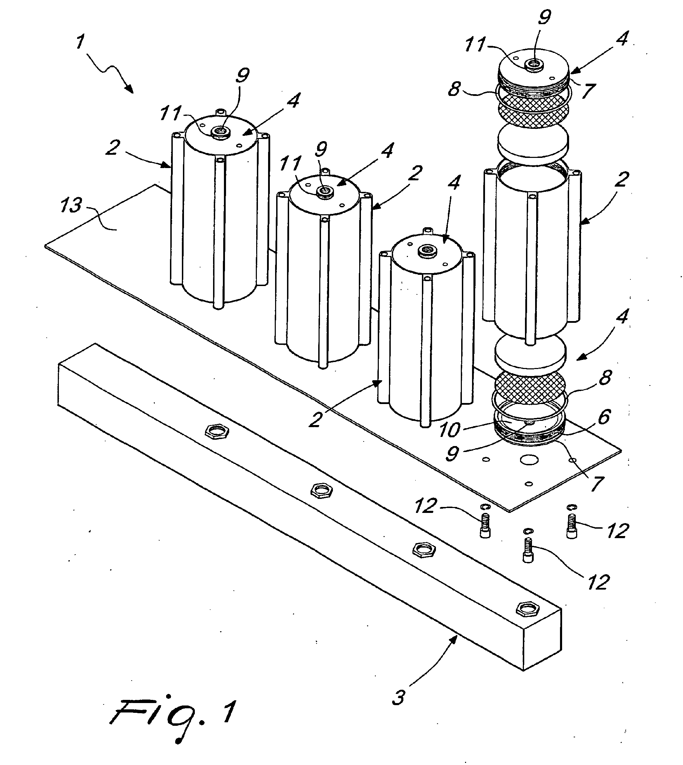

Figure 1 is an exploded perspective view of a PSA machine built according to the present invention;

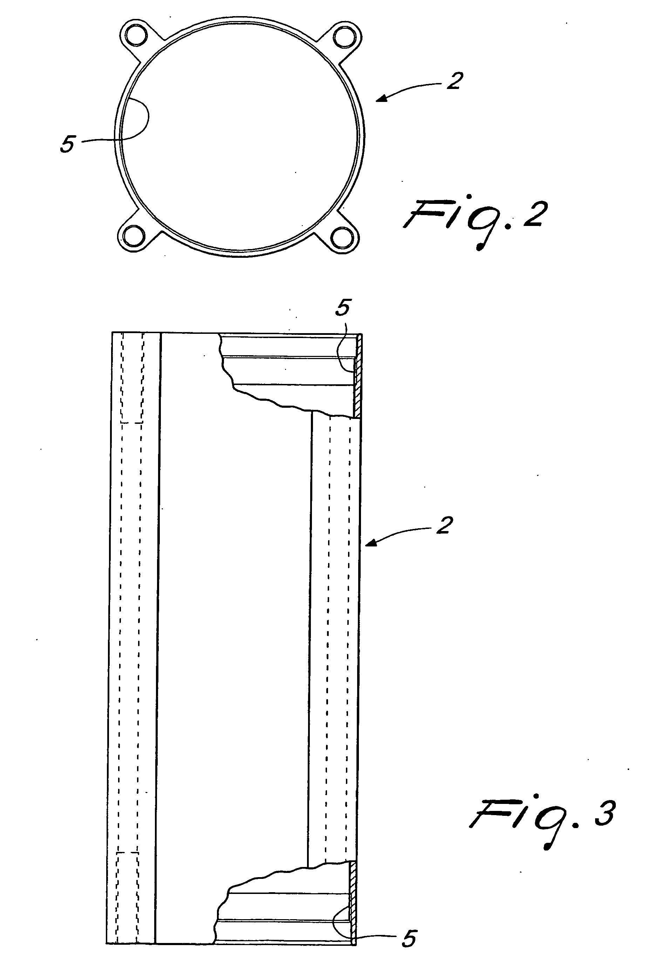

Figure 2 is a sectional plan view of a column of the machine of Figure 1;
Figure 3 is a partially sectional cutout view of the post of Figure 2;

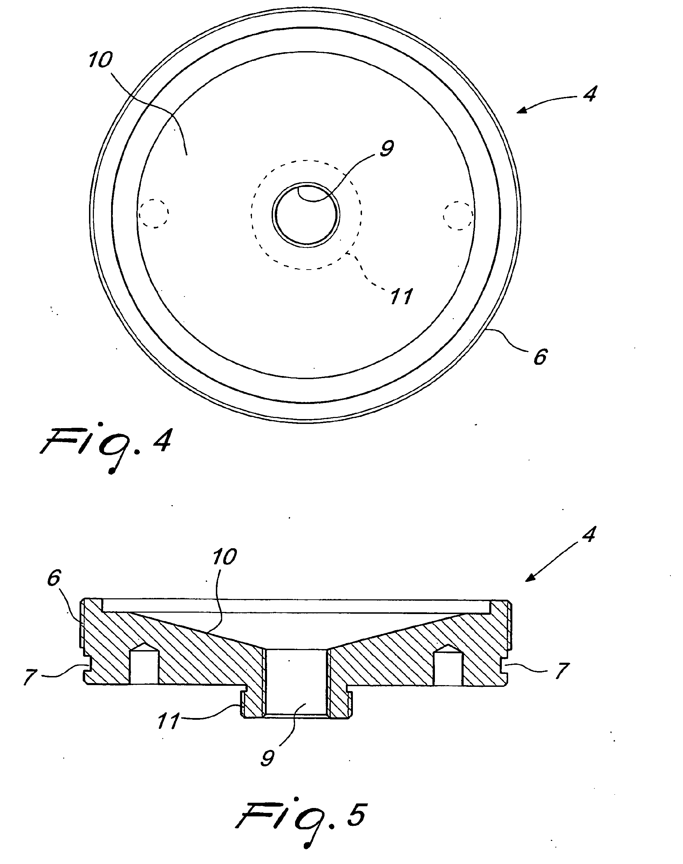

Figure 4 is a plan view of the closure plug;
Figure 5 is a diametrical sectional view of the closure plug of Figure 4.

With reference to the cited figures, a machine according to the invention, generally designated by the reference numeral 1, includes one or more cylindrical members 2, which can be associated with a manifold 3 by means of connecting members 4.

Each cylindrical member 2 is constituted by an extruded aluminum profile whose technical characteristics are suitable to withstand the mechanical stresses caused by the sudden changes in internal pressure that are typical of the operating cycle of the PSA.

The extruded aluminum profile has the advantage of being economic and easily commercially available.

At the ends of the extruded profile 2 there is an internal thread 5, which engages the connecting member 4 constituted by a closure plug.

The plug 4 has an external thread 6 and a seat 7 for a sealing O-ring 8, to be interposed between the plug 4 and the profile of the aluminum tube 2 that accommodates it.

The plug 4 has a calibrated hole 9, whose diameter is such as to allow the passage of a quantity of gaseous mixture which is necessary to make the tank work according to the design data without introducing significant load losses.

The plug 4 has a conical guiding portion 10 leading to the internal part of the calibrated hole. Conical portion 10 acts as a gas diffuser and allows to make the tank input and output gas stream uniform, even in its initial centimeters.

A connecting portion with an external thread 11, at the other end of the calibrated hole 9, allows to connect manifold 3 to the plug. Manifold 3 uniformly distributes the gas among the individual tanks that together form a single battery.

The threads for coupling between the plug 4 and the extruded profile 2 of the tube that constitute the container are provided in such a way that the plug, once screwed on, abuts within the profile 2 and is at the same level as the profile of the tank. The plug does not protrude and it is not recessed within the tank.

Such construction is advantageous because the coupling thread described here would not be able to contain the mechanical stresses caused by the pressures that will be generated within the container at each operating cycle of the PSA.

The purpose of the thread is to allow easy assembly of the tank, so that the assembly can be economically performed by simple automatic machines.

The assembled tanks can thus be stored before final assembly inside the PSA machine.

The stresses caused by the pressures generated during the working cycle of the PSA are managed by a support 13 and by four screws 12 which fix the support to the extruded aluminum profile that constitutes the walls of the tank.

The support therefore allows to link multiple individual tanks together into a single battery and also constitutes the structure of the PSA machine itself.

At this point, having constituted the batteries of tanks, the pneumatic connections among them can be provided by means of an ordinary aluminum extruded pipe, of the type commonly used in compressed air systems.

In practice it has been found that the invention achieves intended aim and objects, a machine of the PSA type having been provided which allows to achieve several considerable advantages with respect to current techniques for assembling the individual containers that constitute the batteries of PSAs.

The obtained advantages are evident in terms of time-saving, ease of assembly, ease of automatic assembly of the containers, and provision of PSAs characterized by minimized space occupation and structural cost.

The extruded aluminum profile used for the containers is easily commercially available, is cheap and has technical characteristics that are suitable to withstand the mechanical stresses caused by the sudden internal pressure changes typical of the operating cycle of PSAs.

The advantages obtained by the machine according to the present invention are numerous and important and can be summarized as follow:
easy assembly of the tanks;
low cost of the materials used;
possibility of assembly by means of simple automatic machines;
low cost of the structure of the battery of tanks;
modularity of the resulting battery;
optimization of the flow of gas within each tank of the battery;
excellent mechanical stability of the structure of the batteries;
minimized assembly costs.

## Claims

1. A pressure swing adsorber machine comprising one or more cylindrical members (2), each constituting a tank of the machine and associated with a manifold (3) by means of a respective connecting member (4); said cylindrical members (2) being constituted by an extruded aluminum profile; said connecting member (4) being constituted by a closure plug having an external thread (6) which engages an internal thread (5) provided at an end of said cylindrical member (2); said machine being **characterized in that** said cylindrical members are fixed to one support member (13) by means of screws; said manifold (3) being constituted by one extruded aluminum pipe suitable to provide the pneumatic connections among said cylindrical members (2); said connecting member (4) having a calibrated hole (9) and a connecting portion with an external thread (11) on the other end of said calibrated hole (9) for connection to said manifold (3); the threads (5, 6) for mutually coupling said connecting member (4) and said cylindrical member (2) being provided in such a manner that said connecting member (4), once screwed on, is flush with said cylindrical member (2), without protruding and without being recessed within.

2. The machine according to claim 1, **characterized in that** said connecting member (4) has a seat (7) for a sealing O-ring (8) to be interposed between said connecting member (4) and said cylindrical member (2); said calibrated hole (9) having a diameter that allows the passage of a quantity of gaseous mixture that is required in order to make the tank work according to the design data without introducing significant load losses; said plug having a conical guiding portion (10), which leads toward the internal part of said calibrated hole and acts as a gas diffuser and allows to make the stream of gas, in input and in output from the tank, uniform even in its initial centimeters.

## Patentansprüche

1. Druckwechseladsorptionsmaschine, umfassend ein oder mehrere zylindrische Elemente (2), deren jedes einen Tank der Maschine bildet und die mittels eines entsprechenden Verbindungselements (4) mit einem Sammler (3) verbunden sind, wobei die zylindrischen Elemente (2) durch ein extrudiertes Aluminiumprofil gebildet sind und das Verbindungselement (4) durch einen Verschlussstopfen mit einem Außengewinde (6) gebildet ist, das mit einem an einem Ende des zylindrischen Elements (2) vorgesehenen Innengewinde (5) im Eingriff ist; **dadurch gekennzeichnet, dass** die zylindrischen Elemente mittels Schrauben an einem Stützelement (13) befestigt sind, dass der Sammler (3) durch ein extrudiertes Aluminiumrohr gebildet ist, das geeignet ist für die Herstellung der pneumatischen Verbindungen unter den zylindrischen Elementen (2), dass das Verbindungselement (4) eine kalibrierte Öffnung (6) und einen Verbindungsbereich mit einem Außengewinde (11) an dem anderen Ende der kalibrierten Öffnung (9) für die Verbindung mit dem Sammler (3) hat und dass die Gewinde (5, 6) für die gegenseitige Verbindung des Verbindungselements (4) und des zylindrischen Elements (2) derart vorgesehen sind, dass das Verbindungselement (4), sobald es angeschraubt ist, mit dem zylindrischen Element (2) fluchtet, ohne überzustehen und ohne in diesem versenkt zu sein.

2. Maschine nach Anspruch 1, **dadurch gekennzeichnet, dass** das Verbindungselement (4) eine Aufnahme (7) für einen Dichtungsring (8) hat, der zwischen dem Verbindungselement (4) und dem zylindrischen Element (2) anzubringen ist, wobei die kalibrierte Öffnung (9) einen Durchmesser hat, der ein gasförmiges Gemisch in einer Menge passieren lässt, die erforderlich ist, damit der Tank gemäß den Auslegungsdaten arbeiten kann, ohne bedeutende Lastverluste einzuführen, wobei der Stopfen einen konischen Führungsbereich (10) hat, der in Richtung auf den inneren Teil der kalibrierten Öffnung führt und als Gasdiffusor dient und der es ermöglicht, den Gasstrom sowohl in den Tank als auch aus dem Tank selbst in seinen ersten Zentimetern gleichmäßig zu gestalten.

## Revendications

1. Machine d'adsorption modulée en pression comprenant un ou plusieurs éléments cylindriques (2), chacun constituant un réservoir de la machine et étant associé à un collecteur (3) à l'aide d'un élément de raccordement respectif (4) ; lesdits éléments cylindriques (2) étant constitués d'un profilé en aluminium extrudé ; ledit élément de raccordement (4) étant constitué par un bouchon d'obturation ayant un filet externe (6) qui s'engage sur un filet interne (5) aménagé à une extrémité dudit élément cylindrique (2) ; ladite machine étant **caractérisée en ce que** lesdits éléments cylindriques sont fixés à un élément de support (13) à l'aide de vis ; ledit collecteur (3) étant constitué d'un tube d'aluminium extrudé convenant pour fournir les raccordements pneumatiques entre lesdits éléments cylindriques (2) ; ledit élément de raccordement (4) ayant un trou calibré (9) et une partie de raccordement avec un filet externe (11) à l'autre extrémité dudit trou calibré (9) pour le raccordement audit collecteur (3) ; les filets (5, 6) permettant de coupler mutuellement ledit élément de raccordement (4) et ledit élément cylindrique (2) étant ménagés de manière telle que ledit élément de raccordement (4), une fois vissé, soit de niveau avec ledit élément cylindrique (2), sans dépasser ni être renfoncé à l'intérieur du trou.

2. Machine selon la revendication 1, **caractérisée en ce que** ledit élément de raccordement (4) a un siège (7) pour un joint d'étanchéité torique (8) à intercaler entre ledit élément de raccordement (4) et ledit élément cylindrique (2) ; ledit trou calibré (9) ayant un diamètre qui permet le passage d'une quantité de mélange gazeux qui est nécessaire pour faire fonctionner le réservoir selon les données de conception sans impliquer de pertes de charge considérables ; ledit bouchon ayant une partie de guidage conique (10), qui mène vers la partie interne dudit trou calibré, sert de diffuseur de gaz et permet d'uniformiser le courant de gaz, en entrée et en sortie du réservoir, même dans ses premiers centimètres.
